Europäisches Patentamt

(19) European Patent Office

Office européen des brevets

(11) Publication number: **0 009 330**
**B1**

# (12) EUROPEAN PATENT SPECIFICATION

(45) Date of publication of patent specification: **16.06.82**

(51) Int. Cl.³: **G 02 B 7/26, H 01 L 33/00**

(21) Application number: **79301738.5**

(22) Date of filing: **24.08.79**

(54) Optical fibre adaptor.

(30) Priority: **22.09.78 US 944937**

(43) Date of publication of application:
**02.04.80 Bulletin 80/7**

(45) Publication of the grant of the patent:
**16.06.82 Bulletin 82/24**

(84) Designated Contracting States:
**DE FR GB IT**

(56) References cited:
**DE - A1 - 2 613 069**
**DE - A1 - 2 755 372**
**US - A - 3 932 761**
**US - A - 3 999 837**
**US - A - 4 045 120**
**US - A - 4 076 376**

(73) Proprietor: **AMP INCORPORATED**
**Eisenhower Boulevard**
**Harrisburg, Pennsylvania (US)**

(72) Inventor: **Bendiksen, Leonard Fjellheim**
**1021B Rolling Glen Drive**
**Harrisburg Pennsylvania 17109 (US)**
Inventor: **Bowen, Terry Patrick**
**York Hill Drive**
**Etters, Pennsylvania (US)**

(74) Representative: **Stuart-Prince, Richard Geoffrey**
**et al,**
**20 Queensmere**
**Slough, Berkshire SL1 1YZ (GB)**

Courier Press, Leamington Spa, England.

Optical fibre adaptor.

The invention relates to an adaptor providing a connection between an optical fibre and an optoelectronic transducer.

A known optical fibre connector described in United States Patent Specification No. 3,999,837 comprises a ferrule having a cylindrical front end portion which is radially resiliently compressible and formed with a concentric bore communicating axially with a cavity formed in a rear end of the ferrule, and an optical fibre bonded in the bore with a first optical face substantially flush with the front end.

However, problems arise in connecting the optical fibre connector with optoelectronic transducers such as photodiodes, light emitting diodes or phototransistors. Care must be taken to prevent damage to the transducers and to minimise attenuation at the optical interfaces. In particular, damage may be caused by abrasion between the fibre and the transducers at the interfaces during their alignment and considerable difficulties may arise in positioning the optical fibre and transducer accurately relative to each other and maintaining their relative positioning during handling. At the same time, in the interests of economic manufacture the connections should be capable of being effected speedily using mass production techniques. Connecting optical fibres to the transducers has therefore proved time consuming and difficult.

According to the invention, an adaptor including a connector as described above is characterised in that the optical fibre is of predetermined length, shorter than the axial length of the ferrule and protrudes a predetermined distance into the cavity with a second optical face operatively aligned with, and spaced axially from, an optoelectronic transducer carried by a can received as a press fit in the cavity and seated against a rearwardly facing shoulder formed in the cavity.

The adaptor provides a package which may be readily manipulated without risk of damage to the transducer and which may be readily connected to another optical fibre connector.

United States Patent Specification No. 3,932,761 describes an adaptor in which the ferrule is a rigid assembly of many parts and the optical fibre is bonded directly onto the transducer. The rigid nature of the ferrule prevents connection using the technique described in United States Patent Specification No. 3,999,837.

German Offenlegungsschrift 2755372 also describes an adaptor in which micromanipulation of the optical fibre relative to the transducer is required accurately to adjust their relative positions which must be maintained while the encapsulating material sets. This is time consuming and relatively unsuitable for production line techniques of manufacture.

A specific example of the invention will now be described with reference to the accompanying drawings, in which:—

Figure 1 is an axial cross-sectional view of a connector ferrule;

Figure 2 is an end view of the ferrule;

Figure 3 is a view similar to Figure 1 during mounting an optical fibre in the ferrule;

Figure 4 is an axial cross-sectional view of an assembled connector;

Figure 5 is an axial cross-sectional view of the connector mounted on a printed circuit board and aligned for mating with a complementary fibre optic connector; and

Figure 6 is an enlarged cross-sectional view of a portion of the mated connector adjacent their optical faces.

The adaptor comprises a ferrule 1 in which is bonded a predetermined length of optical fibre 34 operatively aligned with an optoelectronic transducer such as a light emitting diode 54.

The adaptor ferrule 1 is integrally moulded from plastics material and has a radially resiliently compressible, cylindrical front end portion 2 having a right cylindrical end face 4 intermediate a frusto-conical portion 6 tapering outwardly from the front end to a rear end portion 8 of enlarged diameter having a rear end face 10. A radially outwardly projecting shoulder 11 extends around the junction of portions 6 and 8. A bore 12 is formed concentrically in front end portion 2 and extends rearwardly through part of portion 6 and communicates with a partly frusto-conical cavity 14 which communicates rearwardly with an enlarged, right cylindrical cavity 16 communicating with a right cylindrical counterbore 18 at the rear end face.

An axially extending planar surface 20 projects into cavity 14 defining a shoulder 22 joining an arcuate shoulder 24 at the junction of cavities 14 and 16. A passageway 26 extends through the projection 20 in communication with cavities 14, 16 and counterbore 18. An arcuate shoulder 28 is defined at the junction of cavity 16 and counterbore 18 and is coplanar with a polarising aperture 30 formed in the wall of counterbore 18. A flat 32 is formed on the base of the rear end for handling purposes.

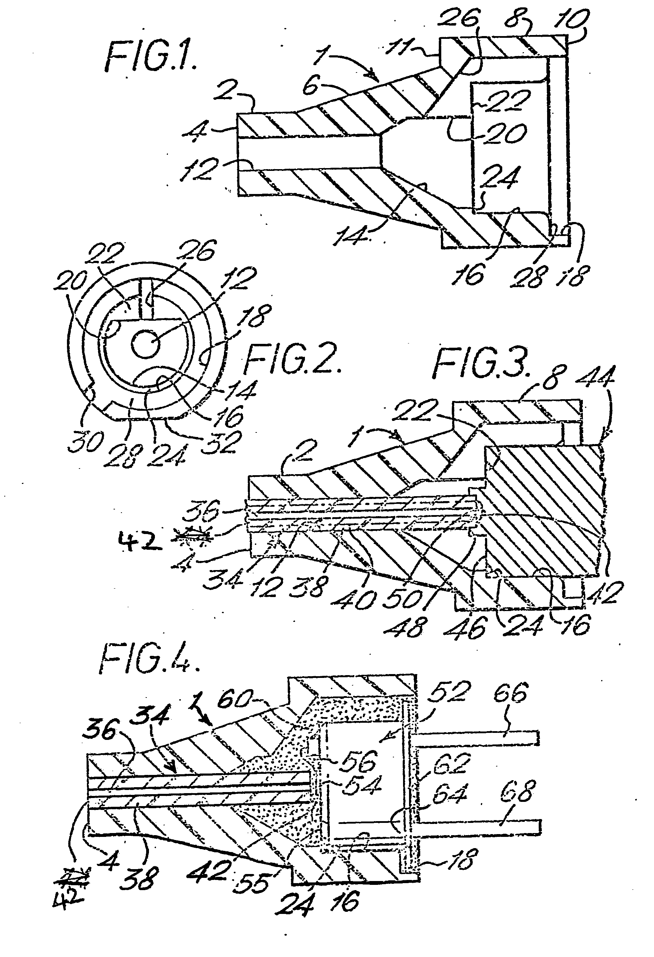

The optical fibre comprises a glass or plastics core 36 of 0.2032 mm (8 mils) diameter surrounded by optical cladding 38 which has either replaced the original cladding or been coated over the original cladding to ensure that the core is concentric with the ferrule portion 2 providing an overall diameter of 1.016 mm (40 mils). Prior to assembling the optical fibre with the ferrule, one end 42 is polished to provide a flat optical face, the optical fibres coated with adhesive and inserted with the other, unpolished end, leading through the rear end of the ferrule along the bore 12 until it protrudes out of the front end (Figure 3). A locating jig 44 comprises a cylindrical rigid metal or plastics block having an outer diameter conforming to the diameter of cavity 16 and a boss 48 having a stepped internal recess 50 receiving the end 42 of the optical fibre is used precisely to locate the optical fibre until the adhesive has set and to protect the polished face of the core from contamination. The end 42 of the optical fibre is then polished flush with the front end 4 of the ferrule to provide the other optical face.

The optoelectronic device comprises a light emitting diode 54 mounted on a planar face 55 of a can 52 from which leads 66, 68 extend rearwardly. The can is provided at the rear with a polarising tab 64 receivable in aperture 30 to orientate the can in the ferrule for correct connection to the leads. The can is received as a press fit in the cavity 16 with the face 55 abutting shoulders 22 and 24 precisely locating the diode 54, spaced a predetermined distance from, and operatively aligned with, the core axis.

The can may be bonded in the cavity by filling the cavity with epoxy resin 60 prior to insertion of the can. Excess resin escapes through passageway 26 and the residue encapsulates and fills the can (through a hole in the can rear, not shown).

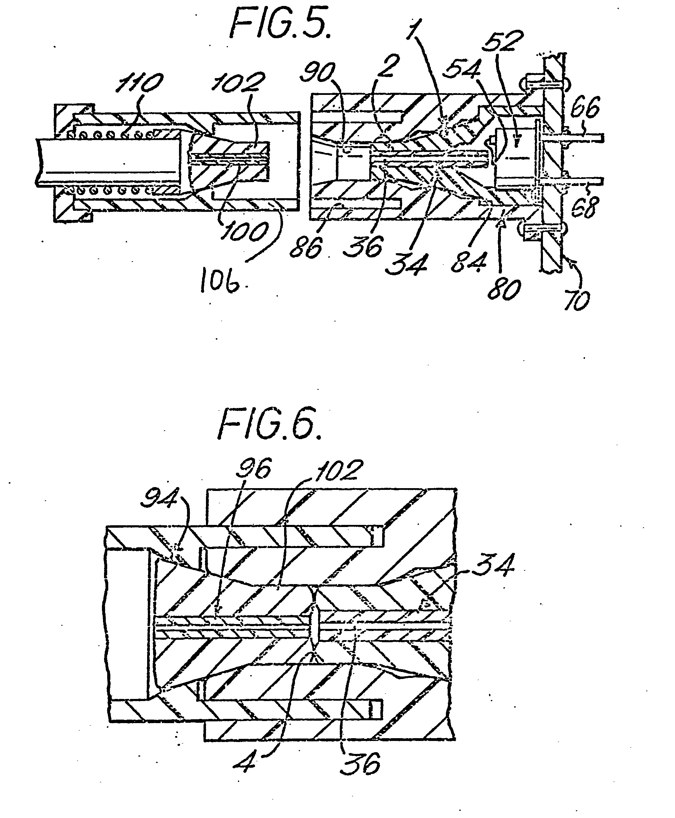

The adaptor may be mounted on a printed circuit board 70 (Figure 5) and a splice bush 80 clamped to the board with the front end of the ferrule received as a force fit within a central passageway 90 and a shoulder 84 on the bush abutting shoulder 11 of the connector. The front end of the bush has a concentric sleeve 86 which receives a circular section flange 106 of a mating connector 94 in which an optical fibre 100 terminated by the method disclosed in our United States Patent Specification No. 3,999,837 (8622) is mounted by a compression spring 110. As the front ends 102, 2 of the connector and adaptor are concentric within the passageway 90, axial alignment of the optical cores is obtained inspite of different core diameters, while engagement of bulging ferrule material maintains a small gap between the cores, preventing abrasion of their polished ends (as shown in Figure 6).

## Claims

1. An adaptor comprising a ferrule (1) having a cylindrical front end portion (2) which is radially resiliently compressible and formed with a concentric bore (12) communicating axially with a cavity (14, 16) formed in a rear end of the ferrule (1) and an optical fibre (34) bonded in the bore (12) with a first optical face (42) flush with the front end (4), characterised in that the optical fibre (34) is of predetermined length, shorter than the axial length of the ferrule (1) and protrudes a predetermined distance into the cavity (14, 16) with a second optical face (42) operatively aligned with, and spaced axially from, an optoelectronic transducer (54) carried by a can (52) received as a press fit in the cavity (14, 16) and seated against a rearwardly facing shoulder (22, 24) formed in the cavity (14, 16).

2. An adaptor according to Claim 1, characterised in that the cavity (14, 16) is filled with a suitable encapsulating material (60) and electrical leads (66 and 68) extend rearwardly from the transducer (54) out of the encapsulating material (60).

3. An adaptor according to Claim 2, characterised in that the ferrule (1) is formed with a drainage passageway (26) communicating with the cavity (14, 16).

## Revendications

1. Adaptateur comprenant une virole (1) ayant une partie extrême avant cylindrique (2) qui peut être comprimée élastiquement et radialement et qui est formée avec un alésage concentrique (12) communiquant avec une cavité (14, 16) formée dans une extrémité arrière de la virole (1), et une fibre optique (34) fixée dans l'alésage (12) avec une première face optique (42) affleurant l'extrémité avant (4), caractérisé en ce que la fibre optique (34) est de longueur prédéterminée, inférieure à la longueur axiale de la virole (1) et fait saillie sur une distance prédéterminée dans la cavité (14, 16) avec une seconde face optique (42) alignée fonctionnellement avec, et espacée axialement d'un transducteur optoélectronique (54) porté par un boîtier (52) logé, par exemple par emmanchement à la presse, dans la cavité (14, 16) et appuyé contre un épaulement (22, 24) tourné vers l'arrière et formé dans la cavité (14, 16).

2. Adaptateur selon la revendication 1, caractérisé en ce que la cavité (14, 16) est remplie d'une matière d'enrobage convenable (60) et des conducteurs électriques (66 et 68) font saillie vers l'arrière du transducteur (54) hors de la matière d'enrobage (60).

3. Adaptateur selon la revendication 2, caractérisé en ce que la virole (1) comporte un canal (26) d'écoulement communiquant avec la cavité (14, 16).

## Patentansprüche

1. Adapter mit einer Muffe (1), die einen zylindrischen Vorderendbereich (2) aufweist, der in Radialrichtung elastisch kompressibel ist und mit einer konzentrischen Bohrung (12) versehen ist, die axial mit einem in einem Rückendbereich der Muffe (1) gebildeten Hohlraum (14, 16) in Verbindung steht, und die eine optische Faser (34) aufweist, die in der Bohrung (12) befestigt ist, wobei eine erste optische Fläche (42) mit dem Vorderende (4) fluchtet, dadurch gekennzeichnet, daß die optische Faser (34) eine vorbestimmte Länge aufweist, die kürzer ist als die axiale Länge der Muffe (1), und um eine vorbestimmte Strecke in den Hohlraum (14, 16) vorsteht, wobei eine zweite optische Fläche (42) funktionsmäßig mit einem optoelektronischen Wandler (54) ausgerichtet ist und einen axialen Abstand von diesem aufweist, und daß den optoelektronischen Wandler (54) ein Becher (52) trägt, der mit Preßsitz im Hohlraum (14, 16) aufgenommen ist und an einer in dem Hohlraum (14, 16) gebildeten, nach rückwärts weisenden Schulter (22, 24) sitzt.

2. Adapter nach Anspruch 1, dadurch gekennzeichnet, daß der Hohlraum (14, 16) mit einem geeigneten Einkapselungsmaterial (60) gefüllt ist und elektrische Zuleitungen (66 und 68) sich rückwärts von Wandler (54) aus dem Einkapselungsmaterial (60) herauserstrecken.

3. Adapter nach Anspruch 2, dadurch gekennzeichnet, daß die Muffe (1) mit einer Drainagedurchführung (26) versehen ist, die mit dem Hohlraum (14, 16) in Verbindung steht.

FIG.1.

FIG.2.

FIG.3.

FIG.4.

# FIG.5.

# FIG.6.